# EUROPEAN PATENT SPECIFICATION

(11) **EP 4 438 369 B1**
(45) Date of publication and mention of the grant of the patent: **14.01.2026**
(21) Application number: 24165416.9
(22) Date of filing: 22.03.2024
(51) Int. Cl.: B60K 15/063, B60K 5/04, F02M 37/00, B60K 13/04, B60K 15/073

(54) **MOTOR VEHICLE WITH AN IMPROVED ARRANGEMENT OF FUEL TANKS**
KRAFTFAHRZEUG MIT VERBESSERTER ANORDNUNG VON KRAFTSTOFFTANKS
VÉHICULE AUTOMOBILE AVEC UN AGENCEMENT AMÉLIORÉ DE RÉSERVOIRS DE CARBURANT

(30) Priority: 28.03.2023 IT 202300005862
(43) Date of publication of application: 02.10.2024
(73) Proprietor: FERRARI S.p.A., 41100 Modena (IT)
(72) Inventor: FAVARETTO, Fabrizio, 41100 Modena (IT)
(74) Representative: Studio Torta S.p.A.

(56) References cited:
- EP-B1- 0 860 315
- CN-A- 110 077 214
- US-A1- 2019 202 500

## Description

### TECHNICAL FIELD

The invention relates to a motor vehicle equipped with an internal combustion engine, as well as a particular arrangement of tanks for containing the fuel for feeding the engine.

### PRIOR ART

The motor vehicle market is constantly looking for technical improvements with the aim of increasing performance, driving pleasure, efficiency, etc., for example.

In addition, technical improvements can also or only be directed at reducing weight, overall dimensions, and costs.

One of the main or most sought-after improvement aspects is that of the overall improvement of the aerodynamics of motor vehicles.

In order to achieve these types of improvements, car manufacturers usually try to redesign the chassis and bodywork.

On the other hand, the possibilities of modifying the shape and construction of the chassis often clash with the needs of a correct and efficient distribution of the overall dimensions, with particular reference to the devices necessary for the operation of the motor vehicle's engine.

In the case where the engine is an internal combustion engine, the devices to be placed in the available volumes determined by the chassis include at least the gearbox, the tanks, the intake system, the exhaust system, the distribution system, in addition to the engine itself, as well as preferably the engine supercharging devices. US 2019/202500 A1 discloses a motor vehicle according to the preamble of claim 1.

In this context, there is a need to design a motor vehicle improved from an aerodynamic point of view, in particular to identify an adequate configuration of the devices auxiliary to the operation of the engine.

The object of the invention is to meet the above need, preferably in a simple and reliable way.

### DESCRIPTION OF THE INVENTION

The object is achieved by means of a motor vehicle, as defined in claim 1.

The dependent claims define particular embodiments of the invention.

### BRIEF DESCRIPTION OF THE DRAWINGS

To better understand the invention, one embodiment thereof is described hereinafter by way of non-limiting example and with reference to the accompanying drawings, wherein:
- Figure 1 is a perspective view of a motor vehicle according to the invention,
- Figure 2 is a perspective view, on an enlarged scale, of a rear portion of the motor vehicle in Figure 1,
- Figure 3 is a perspective view from the rear of the rear portion shown in Figure 2,

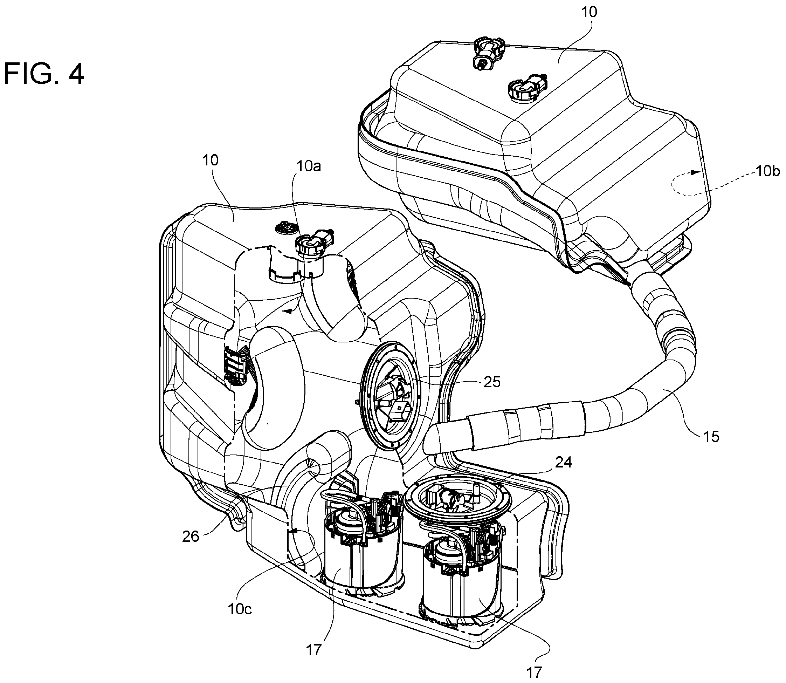

- Figure 4 is a perspective view, on a further enlarged scale, of a tank assembly of the motor vehicle 1, with at least one portion shown as a cutaway,
- Figure 5 is a side view of the rear portion shown in Figure 2,

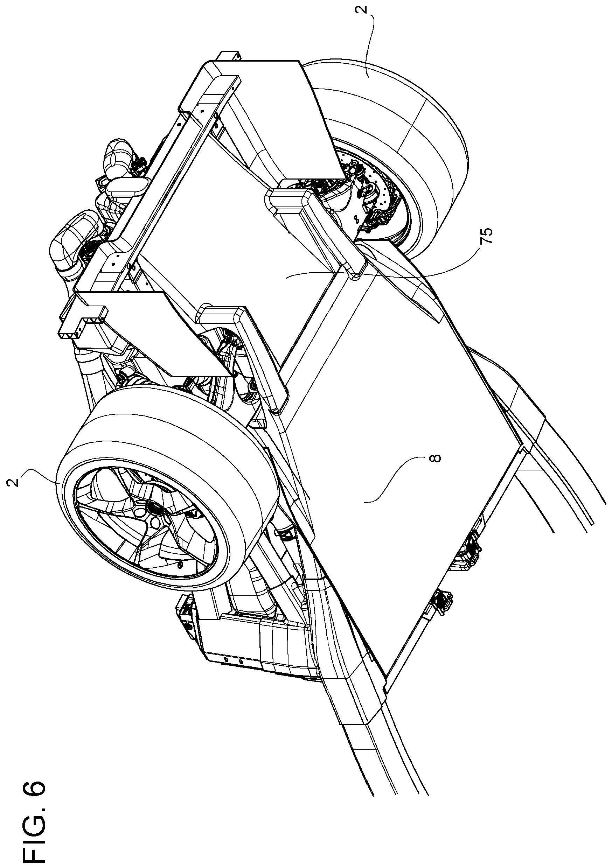

- Figure 6 is a perspective view from below of the rear portion shown in Figure 2,

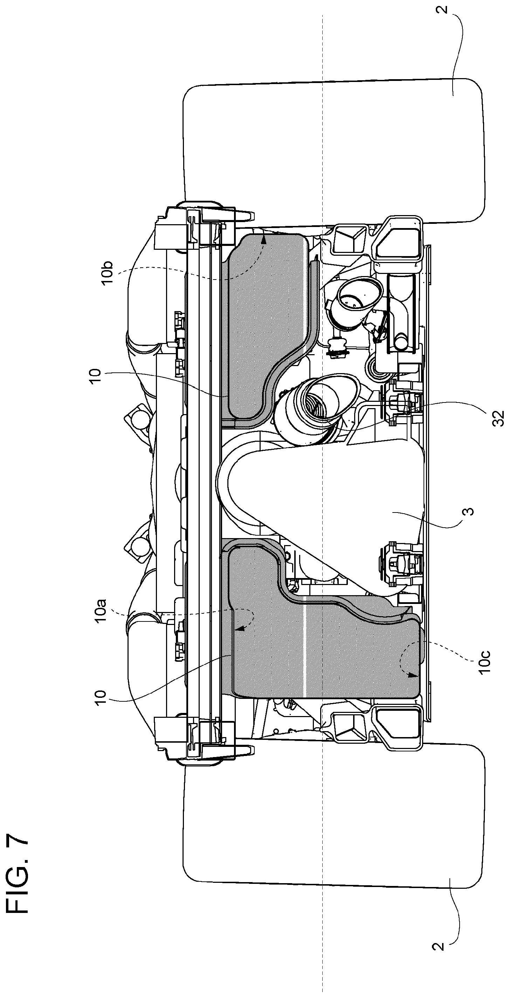

- Figure 7 is a front view of the rear portion shown in Figure 2, with parts removed to show the arrangement of the tank assembly,
- Figure 8 is a side section of the tank assembly,
- Figure 9 is a perspective view, with parts removed for clarity, showing a detail underneath the tank assembly, and
- Figure 10 is a schematic perspective view of components of an internal combustion engine of the motor vehicle in Figure 1.

### EMBODIMENTS OF THE INVENTION

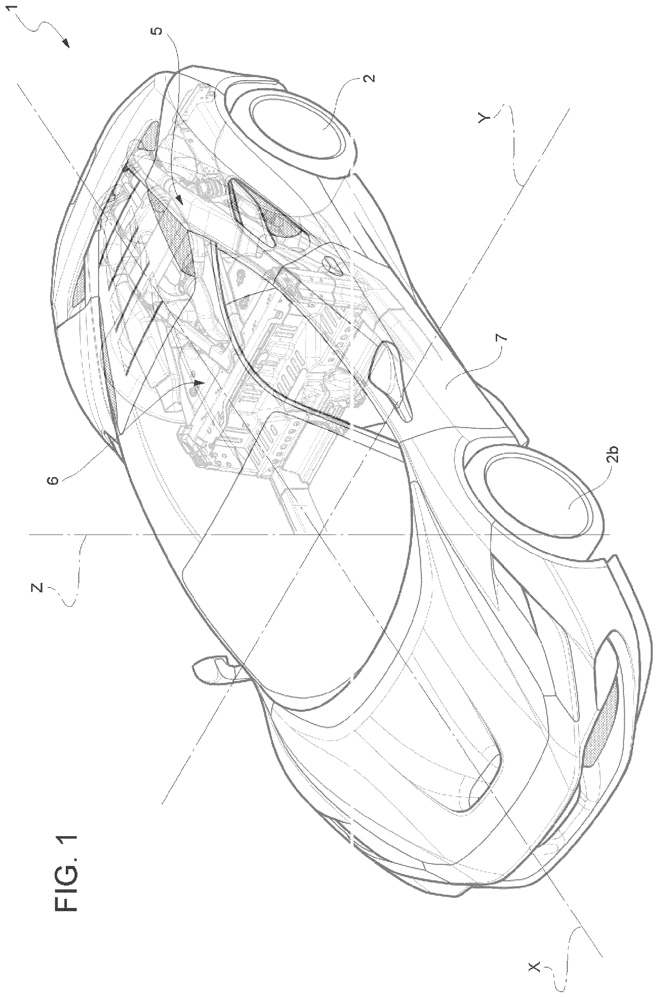

In Figure 1, the reference number 1 is used to indicate, as a whole, a motor vehicle equipped with two rear wheels 2, in particular driving wheels, receiving torque from an internal combustion engine 3.

Figure 1 shows a Cartesian system of axes X, Y and Z, respectively coinciding with a roll axis, a pitch axis, and a yaw axis of the motor vehicle 1. The axis X coincides with the direction of travel of the motor vehicle 1; the axis Y is horizontal and orthogonal to the axis X; the axis Z is orthogonal to the axes X, Y.

The engine 3 is connected to the wheels 2 via a transmission apparatus comprising a gearbox 4 and a differential of a known type, not shown.

The motor vehicle 1 further comprises a body 5, which in turn includes a chassis 6 and a bodywork 7 carried by the chassis 6 and defining, among other things, the outer surfaces of the motor vehicle 1.

The motor vehicle 1 also comprises a bottom 8 having a surface facing, in use, the road travelled by the motor vehicle 1.

The engine 3 could be fuelled by different types of fuel, including, for example, petrol, diesel, synthetic fuel, etc., provided that the fuel is preferably normally in the liquid state. For clarity, the term normally refers to ambient temperature and pressure conditions.

In order to contain the fuel, the motor vehicle 1 also comprises two tanks 10 arranged on the respective sides of the engine 3, in particular in front of the engine 3 or at a front end of the engine 3.

For clarity, terms like anterior, posterior, front, back, rear, etc., refer to the direction of travel of the motor vehicle 1 during use.

Therefore, the internal combustion engine 3 is arranged between the tanks 10 according to the pitch axis of the motor vehicle 1. More particularly, the internal combustion engine 3 is arranged directly between the tanks 10 according to the pitch axis. In other words, according to the pitch axis, no other components are interposed between the internal combustion engine 3 and the tanks 10.

The tanks 10 are carried by the chassis 6 in a fixed position relative thereto.

Preferably, at least one of the tanks 10 has at least one section basically triangular or trapezoidal in shape according to a horizontal plane, more precisely including the roll axis or the direction of travel of the motor vehicle 1, i.e., a plane orthogonal to the yaw axis of the motor vehicle 1.

As can be derived from the drawings, for example, the term basically herein implies a shape that technically resembles the rigorous one despite having, for example, rounded vertices, connected edges, slightly curved portions in place of one or more edges, small irregular sections at portions of one or more edges, localized recesses, and the like.

The shape of the section referred to above is tapered, in greater detail, toward the rear of the motor vehicle 1.

Preferably, both tanks 10 have respective sections tapered according to a plane of section orthogonal to the yaw axis; in greater detail, the sections are tapered toward the rear of the motor vehicle 1.

Specifically, the chassis 6 has a portion, in particular a rear portion, forming a cell 6b, which in turn defines a compartment accommodating the engine 3, i.e., an engine compartment of the motor vehicle 1.

The cell 6b has a basically trapezoidal shape in that it comprises beams 6c, which form a reticulation or framework extending basically in two planes orthogonal to the roll axis, the planes practically forming the bases of the trapezoidal shape, and on two ideal surfaces practically forming the sides of the trapezoidal shape.

The smaller base of the trapezoidal shape is posterior to the larger base.

The ideal surfaces or sides are preferably curved and with concavities towards the outside of the motor vehicle 1.

The concavities have respective areas of maximum recess towards the roll axis at the rear wheels 2.

In this way, the body 5 forms respective lateral aerodynamic channels 12 between the sides of the cell 6b and the rear wheels 2.

More generally, the sides tend to converge towards the roll axis, thus forming the lateral aerodynamic channels 12 between the sides and the rear wheels 2.

In fact, the sides could also be flat, for example.

In other words, the body 5 is tapered or the sides are tapered towards the rear, thus forming the lateral aerodynamic channels 12.

Specifically, the cell 6b has an upper reticular structure 6d in a plane orthogonal to a yaw axis of the motor vehicle 1 or a vertical axis.

The upper reticular structure 6d delimits the engine compartment at the top and comprises two cross members 11 parallel to the pitch axis and two beams 13 extending on the sides of the cell 6b in such a way as to basically form a trapezium with the beams 11.

In addition, the upper reticular structure 6d comprises two oblique beams 14, which diverge from an intermediate area of one of the cross members 11, in particular from the most anterior one, ending at respective vertices formed by the intersections of the beams 13 with the other of the cross members 11.

In this way, the oblique beams 14 delimit three triangular areas corresponding to three portions of the engine compartment respectively delimited at the top by the three triangular areas. The three portions of the engine compartment have triangular shapes or more precisely prismatic shapes with triangular bases.

Of the three portions of the engine compartment, the central one houses the engine 3, whereas the remaining ones house the tanks 10, respectively.

In particular, the tanks 10 completely occupy at least the corresponding two triangular areas and preferably the entire two portions of the engine compartment.

The tanks 10 preferably have the same or a similar width according to the pitch axis and the same or a similar depth according to the roll axis.

In addition, the tanks 10 have different heights according to the yaw axis.

Therefore, of the tanks 10, the higher one will be indicated as the first tank, whereas the other one will be indicated as the second tank.

The first tank has or defines an inner volume comprising a portion 10a having a height equal to or greater than that of the inner volume 10b of the second tank; moreover, the inner volume of the first tank comprises a portion 10c below the portion 10a and directly communicating with the portion 10a.

In other words, the tanks 10 have respective upper ends having the same height or height level, whereas the first tank has a lower end having a height or height level lower than that of a lower end of the second tank.

In other words, still, the boundary between the portions 10a, 10c is arranged at the same height level or at the same height, according to the yaw axis, as that of the bottom of the second tank or of its inner volume 10b.

In other words, still, the second tank extends above the portion 10c, that is, in an area having a height or height level higher than that of the portion 10c.

In practice, the portion 10c defines a "nurse" for the first tank.

The tanks 10 communicate with each other; the motor vehicle 1 comprises a pipe 15 which connects the tanks 10.

The pipe 15 has two open ends at the portion 10a and the inner volume 10b, respectively, of the second tank. In other words, the ends of the pipe 15 communicate directly with the first portion 10a and the inner volume 10b, respectively.

The pipe 15 has an axis, which can extend entirely in a plane orthogonal to the yaw axis.

Alternatively, each of the two end sections of the pipe 15 may be slightly inclined downwards in relation to the plane orthogonal to the yaw axis. Here, the term slightly refers to an inclination less than 20°, preferably less than 10°.

In the latter case, the axis of the pipe 15 may have an intermediate section extending in the plane orthogonal to the yaw axis. For example, the inclined ends or terminal sections of the pipe 15 extend directly from the intermediate section to the respective tanks 10.

In general, the pipe 15 could comprise an intermediate section having a rectilinear axis parallel to the pitch axis. Specifically, the intermediate section is arranged anteriorly to the tanks 10, according to the direction of travel of the motor vehicle 1.

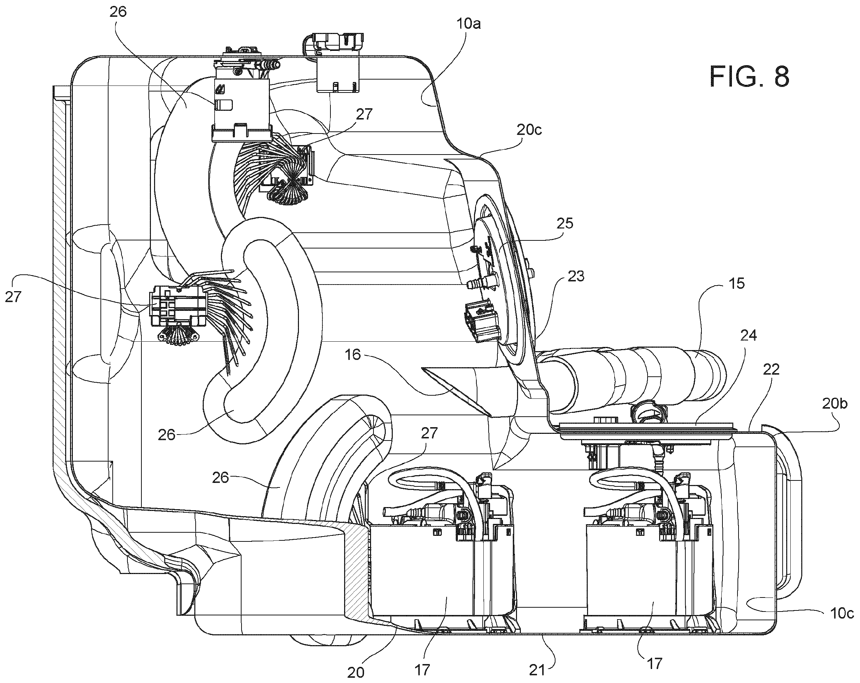

Figure 8 shows a section of the first tank according to a plane of section orthogonal to the pitch axis. The end of the pipe 15 visible in Figure 8 ends with a contour 16, the projection of which on the section plane is oblique relative to the plane orthogonal to the yaw axis and points downwards.

In other words, the end of the pipe 15 ends with a mouth opening pointing to the bottom of the first tank, i.e., pointing to the portion 10c or downwards, although the opening communicates directly with the portion 10a.

The motor vehicle 1 comprises one or more pumps 17 to draw fuel from the tanks 10 and feed the fuel to the engine 3, for example through a known supply line, not shown.

Preferably, all the pumps 17 are arranged within the portion 10c, and more precisely at the bottom of the portion 10c, i.e. of the first tank.

As shown in Figure 8, the portion 10c is externally delimited by a portion or shell 20 of the first tank. Similarly, the portion 10a is delimited by another portion or shell 20c of the first tank.

In turn, the portion 20 comprises an end 20b projecting forwardly or towards the front of the motor vehicle 1 relative to the rest of the portion 20 according to the roll axis.

Therefore, the end 20b projects forwardly or towards the front of the motor vehicle 1 relative to the portion 20c, according to the roll axis.

The end 20b comprises a lower wall 21 forming part of the bottom of the first tank, and an upper wall 22 facing the lower wall 21.

The upper wall 22 projects cantilevered along the roll axis relative to a wall 23 extending upwards. The wall 23 could be part of the end 20b, but not necessarily; the wall 23 is more generally part of the first tank and could delimit an area of the portion 10a instead of or in addition to an area of the portion 10c.

Preferably, the upper wall 22 has an opening for inspecting one of the pumps 17 arranged immediately below said opening.

Regardless of the presence or absence of the aforementioned opening, the wall 23 has another opening for inspecting another of the pumps 17 arranged in an area of the portion 10c not directly delimited by the end 20b, i.e., inside the rest of the portion 20 relative to the end 20b, i.e.**,** immediately below the portion 10a.

The first tank comprises lids 24, 25 that close the openings in the walls 22, 23 for inspecting the pumps 17, but that can be opened manually if required.

The volume delimited by the end 20b and thus forming part of the portion 10c is arranged in an advanced position relative to the portion 10a, with reference to the direction of travel of the motor vehicle 1.

The pumps 17, in particular those that can be inspected through the openings in the walls 22, 23, are preferably aligned according to the roll axis and placed, in particular, at the bottom of the first tank or portion 10c.

More particularly, all the pumps 17 are aligned along a single straight axis parallel to the roll axis.

Within the first tank, specifically, the motor vehicle 1 comprises one or more floats 26 and respective detection devices 27 configured to determine the position of the floats 26.

The function and construction characteristics of the floats 26 and the related detection devices 27 are known per se and will therefore not be described in detail.

Preferably, all the floats 26 are arranged within the first tank.

Therefore, the motor vehicle 1 has no pumps and/or floats inside the second tank. In other words, the second tank contains no pumps and/or floats therein.

More particularly, the second tank does not contain any type of device therein, i.e., it is adapted to only and exclusively contain fuel, in addition to, of course, the air normally present in the environment.

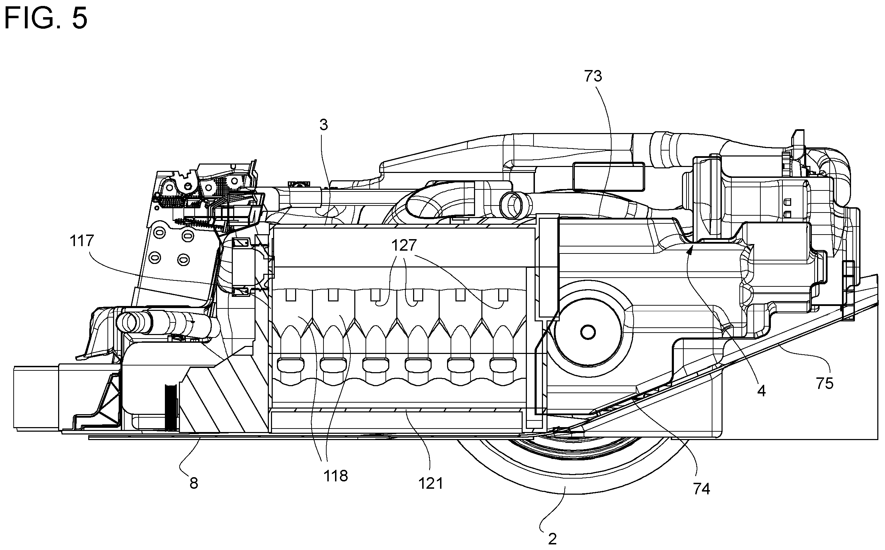

As shown in Figure 5, the internal combustion engine 3 comprises a crankcase 117 within which a plurality of cylinders 118 are located.

Preferably but not necessarily, the cylinders 118 are arranged in line, i.e., aligned along a straight axis, specifically parallel or more precisely coincident with the roll axis, as this solution allows the transversal dimensions of the engine 3 to be reduced and thus, among other things, allows more space for the tanks 10. In the embodiment shown in the attached figures there are six cylinders 118 in line, but obviously the number and layout of the cylinders 118 may be different.

Each cylinder 118 has a respective combustion chamber and a respective piston 119 mechanically connected to a drive shaft 120 (by means of a respective connecting rod) to transmit the force generated by combustion to the drive shaft 120. A cylinder head 121 is coupled (connected) to the crankcase 117 and forms the crown of the cylinders 118 (i.e., the upper closure of the cylinders 118 with the so-called "flame plate"). In the case of an in-line layout of the cylinders 118, a single cylinder head 121 is provided, whereas in the case of a "V" layout of the cylinders 118, two twin cylinder heads 121 are provided for the two banks of cylinders 118.

The assembly of the crankcase 117 and the cylinder head 121 constitutes the engine block of the internal combustion engine 3.

In the embodiment shown in the attached figures, the internal combustion engine 3 is arranged (oriented) longitudinally, i.e., the drive shaft 120 is arranged (oriented) longitudinally, i.e., parallel to the roll axis, as this solution allows the transversal dimensions of the internal combustion engine 3 to be reduced and therefore, among other things, allows more space for the tanks 10. According to other embodiments, not shown, the internal combustion engine 3 is arranged (oriented) transversely, i.e., with the drive shaft 120 oriented parallel to the pitch axis.

In the embodiment shown in the attached figures, the internal combustion engine 3 is arranged in a central and/or rear position according to the roll axis, i.e., the internal combustion engine 3 is arranged behind a passenger compartment (not shown) of the motor vehicle 1 and is located between the passenger compartment and the rear wheels 2 (the central arrangement as shown in the attached figures) or beyond the rear wheels 2 (the rear arrangement, not shown).

Furthermore, in the embodiment shown in the attached figures, the internal combustion engine 3 is arranged in a central position according to the pitch axis, i.e., along the roll axis.

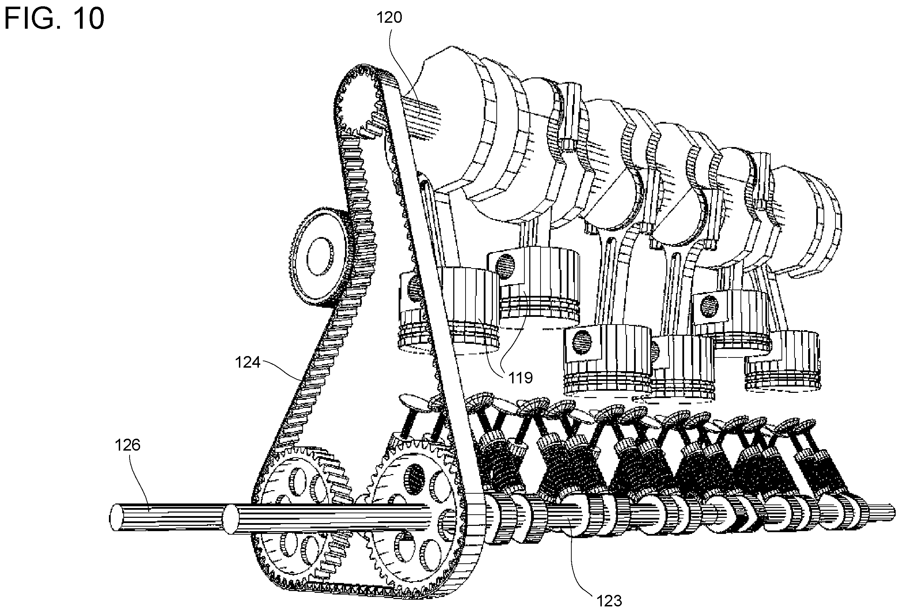

Each cylinder 118 comprises two intake valves controlled by a camshaft 123 which receives motion from the drive shaft 120 via a belt transmission 124 (Figure 10); as an alternative to the belt transmission 124, a different type of transmission could be used, for example a chain transmission or a gear transmission. Furthermore, each cylinder 118 comprises two exhaust valves controlled by a camshaft 126 which receives motion from the drive shaft 120 via the belt transmission 124. The intake valves, the exhaust valves and the corresponding control means, known per se and comprising return springs and the camshafts 123, 126, are housed in the cylinder head 121.

Each cylinder 118 further comprises (at least) one injector 127 (schematically shown) configured to inject fuel into the cylinder 118 cyclically.

The injector 127 is fed by the pumps 17 via the aforementioned supply line.

The injection of fuel into the cylinder 118 may be direct but also partially or completely indirect, without any loss of generality.

In addition, each cylinder 118 comprises at least one ignition device or spark plug, not shown, adapted to be cyclically activated to trigger the ignition of a mixture of air (comburent) and fuel present in the combustion chamber, in particular at the end of the compression stroke.

As shown in the attached figures, the internal combustion engine 3 is oriented vertically, with the drive shaft 120 arranged higher than the cylinders 118. In other words, the internal combustion engine 3 is arranged "upside down" compared to the traditional arrangement whereby the cylinders 118 are at the top and the drive shaft 120 is at the bottom. Accordingly, the cylinder head 121, which forms the crown of the cylinders 118, is arranged below the crankcase 117 and represents the lowest part of the internal combustion engine 3.

In other words, the cylinder head 121 faces, in use, the road travelled by the motor vehicle 1.

The motor vehicle 1 comprises an intake assembly 29 configured to draw air from the outside environment and convey it into the cylinders 118 of the internal combustion engine 3 (the entry of the air into the cylinders 118 is regulated by the intake valves mentioned above).

The intake assembly 29 comprises an intake manifold communicating with all the cylinders 118; preferably, the entry of the air into the intake manifold is regulated by a throttle valve.

In addition, the motor vehicle 1 comprises an exhaust assembly 32 configured to discharge exhaust gases from the cylinders 118 of the internal combustion engine 3 into the external environment.

Among other things, the exhaust assembly 32 comprises (at least) one exhaust gas treatment device 33, for example comprising a known catalyst, not shown.

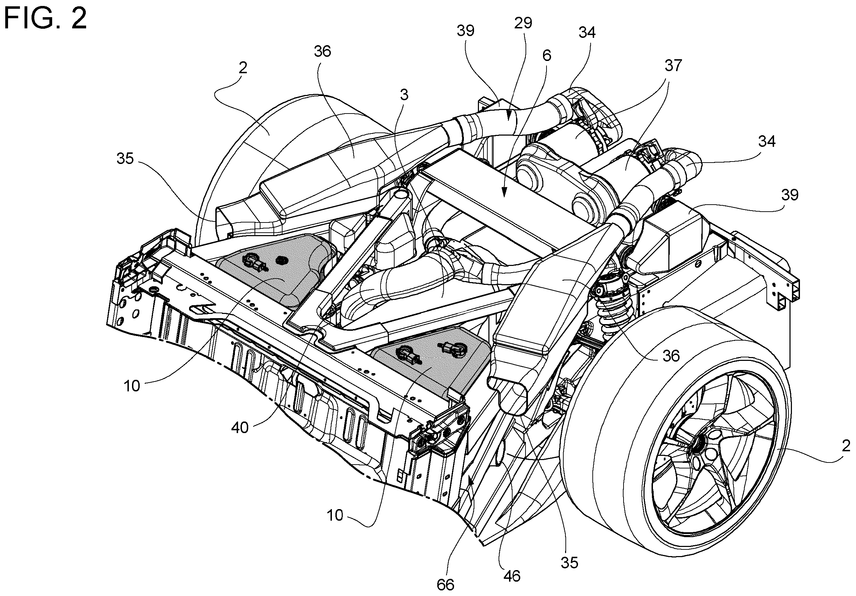

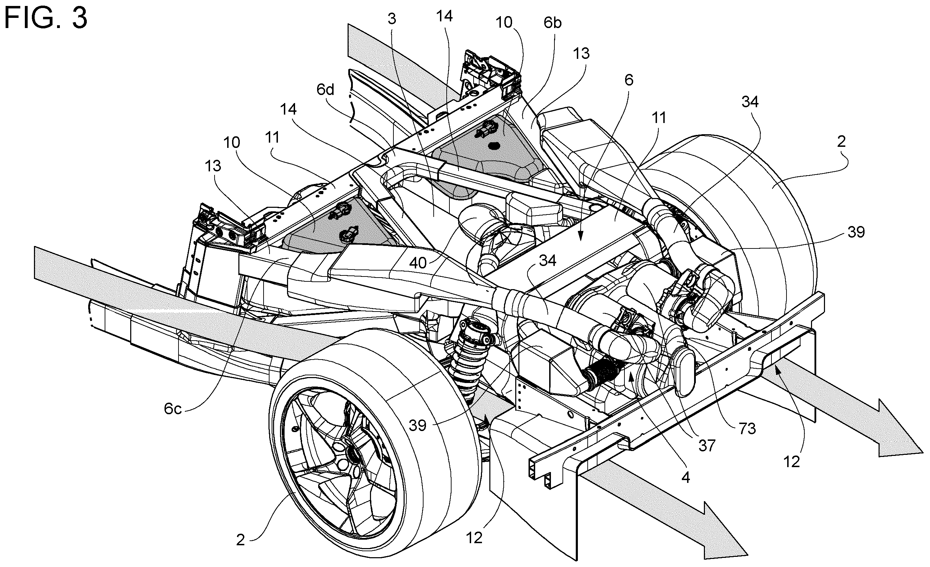

As shown in Figures 2 and 3, the intake assembly 29 comprises two intake lines 34, in particular arranged on the two sides of the motor vehicle 1.

The lines 34 comprise respective ends defined by corresponding air intakes 35, in particular obtained through the bodywork 7.

Each line 34 preferably comprises an air filter 36 at the respective air intake 35 to filter the air drawn through said air intake 35.

Each intake line 34 further comprises a compressor device 37 configured to increase the air pressure, with the aim of increasing the volumetric efficiency of the cylinders 118.

Downstream of the related compressor device 37, each intake line 34 comprises a corresponding intercooler 39.

In addition, the intake lines 34 end downstream of the intercoolers 39 into a single intake duct 40, particularly just above the internal combustion engine 3.

In turn, the intake duct 40 is connected to or communicates with the intake manifold.

The intake duct 40 is not essential, so the intake lines 34 could have ended directly into the intake manifold.

Alternatively, rather than in parallel as in the embodiment just described, the intercoolers 39 could have been arranged in series. In this case, the intake lines 34 would end at the compressor devices 37, whereas the intake duct 40 would connect both outlets for the compressed air of the compressor devices 37 to the intake manifold via the intercoolers 39 arranged in series.

Preferably, the compressor devices 37 are arranged between the intercoolers 39 according to the pitch axis; in other words, the intercoolers 39 are on the respective sides of a compression assembly defined by the compressor devices 37.

According to a preferred embodiment, one of or both the intercoolers 39 are of the air/liquid, especially air/water, type.

In this way, the intercoolers 39 may be smaller in size than corresponding air/air intercoolers. Therefore, since the intercoolers 39 are arranged on the sides of the compression assembly defined by the compressor devices 37, the overall dimensions of the intercoolers 39 and the compressor devices 37 according to the pitch axis are minimized. This allows the chassis 6 to be tapered at the rear of the motor vehicle 1 to a maximum extent and thus the aerodynamic channels 12 to be formed effectively.

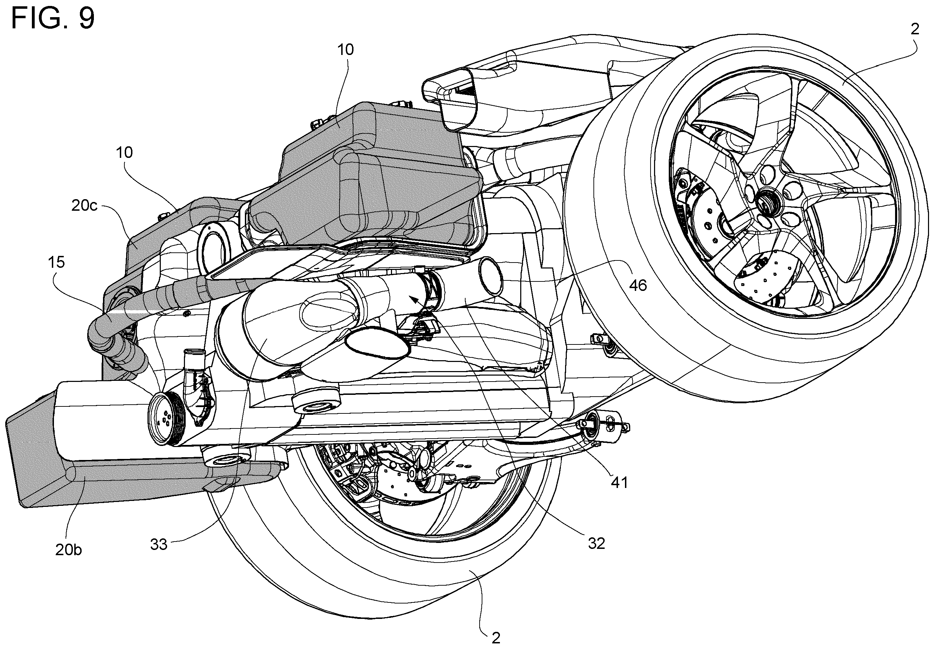

As shown in Figure 9, the exhaust assembly 32 comprises an exhaust duct 41 which is arranged to receive the exhaust gases from the cylinders 118 of the internal combustion engine 3.

The exhaust duct 41 is connected to the cylinders 118 by respective channels originating from the cylinders 118 and ending into an inlet of the exhaust duct 41.

The exhaust duct 41 comprises one or more exhaust gas treatment devices 33 arranged in series.

Downstream of the exhaust gas treatment devices 33, the exhaust duct 41 preferably ends with a single pipe leading into an outlet port 46. According to other embodiments, not shown, the exhaust duct 41 may end with several pipes leading into respective outlet ports 46.

Preferably, all the occurring outlet ports 46 are arranged on one of the sides of the cell 6b of the chassis 6.

In other words, the outlet port 46 is arranged asymmetrically on only one side of the motor vehicle 1 and is located between a rear wheel 2 and a front wheel 2b on the same side of the motor vehicle 1.

In particular, the outlet port 46 is obtained through a side of the bodywork 7.

Preferably, the gearbox 4 is aligned with the internal combustion engine 3 according to the roll axis and is arranged behind the internal combustion engine 3. In particular, the gearbox 4 is aligned with an upper portion of the engine block (crankcase 117 and cylinder head 121) of the internal combustion engine 3. In other words, the gearbox 4 is aligned with the upper part of the crankcase 117.

More particularly, the gearbox 4 comprises at least one primary shaft (not shown) connected to the drive shaft 120 via a known transmission, not shown, for example comprising gears, and/or a dual-mass flywheel, and/or the like.

The gearbox 4 comprises an outer casing 73, which is tapered toward the rear so that the height of the casing 73 decreases progressively from the front to the rear. In other words, a front wall of the casing 73 extends in height more than a rear wall of the casing 73.

In particular, the casing 73 at the bottom has a bottom wall 74 which is inclined in relation to the roll axis due to the tapered shape of the casing 73.

In addition, as can be seen in Figure 3, the intercoolers 39 are arranged on the respective sides of the gearbox 4 (i.e., on the sides of the casing 73 of the gearbox 4).

Furthermore, the intercoolers 39 are preferably arranged above the gearbox 4 (i.e., above the casing 73 of the gearbox 4). More precisely, at least one portion of the intercoolers 39 is arranged above or at a higher level than that of the gearbox 4 or its casing 73, but it is not necessary that the intercoolers 39 are entirely above the gearbox 4 or its casing 73, although they may be so according to some embodiments, not shown.

According to the embodiment shown herein, the compression assembly comprising the two compressor devices 37, in particular twin or equal compressor devices, is arranged behind (at the rear of) the engine block (consisting of the crankcase 117 and the cylinder head 121) of the internal combustion engine 3.

Moreover, the compression assembly is arranged higher than the engine block of the internal combustion engine 3. In other words, at least one portion of the compression assembly or more specifically at least two respective portions of the compressor devices 37 are arranged above or at a higher level than that of the engine block of the internal combustion engine 3.

In addition, the compression assembly is arranged higher than the gearbox 4 or its casing 73. In other words, at least one portion of the compression assembly or more specifically at least two respective portions of the compressor devices 37 are arranged above or at a higher level than that of the gearbox 7 or its casing 73.

In particular, the compression assembly or a portion thereof is arranged directly above the gearbox 7 or its casing 73.

Similarly, in particular, the intercoolers 39 are arranged higher than the engine block of the internal combustion engine 3 and are located behind the engine block of the internal combustion engine 3.

The compressor devices 37 comprise or are defined by two compressors, e.g., twin (identical) compressors. The two compressors are preferably turbomachines, more preferably centrifugal compressors.

The compressor devices 37 are aligned with each other along the pitch axis, i.e., side-by-side and at the same height.

The compressor devices 37 are preferably powered by the internal combustion engine 3 or more precisely by the rotation of the drive shaft 120.

In particular, the motor vehicle 1 comprises a transmission, more particularly of the gear type with a clutch, configured to selectively transmit (specifically when the clutch is engaged) at least part of the power delivered by the engine 3 or the rotation of the drive shaft 120 to both compressor devices 37, thus powering them.

More particularly, the latter transmission comprises the primary shaft of the gearbox 4. In other words, the compressor devices 37 receive power from the primary shaft of the gearbox 4.

According to alternative embodiments, the transmission comprises the gearbox 4 or a portion thereof, such that the rotation of the drive shaft 120 is transmitted to the compressor devices 37 in a reduced manner via one of the gears or transmission ratios of the gearbox 4.

Preferably, the motor vehicle 1 does not have turbochargers configured to supercharge the internal combustion engine 3.

In other words, the compressor devices 37 are not powered by turbines driven by the exhaust gases of the internal combustion engine 3.

This makes the turbines unnecessary, saving useful space, for example for the definition of the aerodynamic channels 12 or for the tapering of the chassis 6 towards the rear of the motor vehicle 1.

Preferably, the exhaust assembly 32 is at least partially housed within a compartment obtained below the second tank, as best visible in Figure 9.

In particular, the compartment in which the exhaust assembly 32 is at least partially housed is arranged at the same height as the portion 10c, more particularly on the opposite side of the internal combustion engine 3.

As shown in Figure 5, the motor vehicle 1 comprises a rear aerodynamic puller 75, which faces, in use, the road travelled by the motor vehicle 1, starts at a rear wall of the engine block (consisting of the crankcase 117 and the cylinder head 121) of the internal combustion engine 3, and is arranged below the gearbox 4 (i.e., below the casing 73).

According to a preferred embodiment, the wall 74 of the casing 73 has the same inclination as the rear aerodynamic puller 75.

In other words, the wall 74 reproduces the shape of the rear aerodynamic puller 75 and has the same inclination. In this way, the rear aerodynamic puller 75 makes use of all the space available under the gearbox 4 (i.e., under the casing 73).

The puller 75 is inclined in relation to the horizontal plane along which the bottom 8 extends.

The advantages of the motor vehicle 1 according to the invention are clear from the foregoing.

The arrangement of the tanks 10 in relation to the internal combustion engine 3 together with the basically triangular shape of the tanks 10 allows considerable space saving with associated advantages in the freedom of positioning the other devices auxiliary to the operation of the internal combustion engine 3.

More particularly, the reduced height of the second of the tanks 10 frees a compartment immediately below the same second tank; the compartment can advantageously be used for housing one or more auxiliary devices. Specifically, in fact, the exhaust assembly 32 is at least partially housed in the compartment.

In this way, the exhaust assembly 32 extends laterally until it ends at the outlet port 46, without occupying spaces in the rear area of the motor vehicle 1.

This contributes to the tapering of the chassis 6, resulting in the design of the aerodynamic channels 12.

In addition, the portion 10c provides a fuel storage area that always remains with a minimum amount of fuel, so that the pumps 17 can always feed the internal combustion engine 3.

Indeed, even if the motor vehicle 1 were to travel around a curve, the rise of the fuel from the portion 10c, resulting in the passage of fuel into the inner volume 10b via the pipe 15, remains limited, so that in any case at least some fuel still remains in the portion 10c and can therefore be drawn by the pumps 17.

Due to the layout and shape of the tanks 10, all devices such as the pumps 17 and the floats 26 may be concentrated in the first of the tanks 10, thus allowing the second tank to be emptied by these devices.

Therefore, the fuel storage capacity of the second of the tanks 10 is consequently maximized.

The pipe 15 allows effective communication between the tanks 10 according to the principle of communicating vessels. In this way, the overall storage capacity of the tanks 10 is optimal.

Lastly, it is clear that modifications and variations may be made to the supercharging device according to the invention, without however departing from the scope of protection defined by the claims.

In particular, each of the devices depicted schematically in the figures is independent of the other details and is specifically designed to solve specific technical problems in isolation from the other details.

In addition, the number of components described and illustrated may be different. In particular, this applies to all the duplicate components, i.e., twin, or identical components.

## Claims

1. A motor vehicle comprising
- an internal combustion engine (3) extending along a direction parallel to a roll axis of the motor vehicle (1),
- a first and a second tank (10) for containing a fuel for feeding the internal combustion engine (3),
wherein the internal combustion engine (3) is arranged between the first and second tanks (10) according to a pitch axis of the motor vehicle (1),
**characterized in that** the first tank has a first height according to a yaw axis of the motor vehicle (1) greater than a second height of the second tank according to the yaw axis.

2. The motor vehicle according to claim 1, wherein the second tank defines a second inner volume (10b), and wherein the first tank defines a first inner volume having a first portion (10a) having a third height according to the yaw axis equal to a fourth height of the second inner volume (10b) according to the yaw axis, the first inner volume having in addition a second portion (10c) below the first portion (10a) and directly communicating with the first portion (10a).

3. The motor vehicle according to claim 2, further comprising an exhaust assembly (32) configured to discharge exhaust gases produced by the internal combustion engine (3) into the environment outside the motor vehicle (1), wherein the exhaust assembly (32) is at least partially housed in a compartment positioned immediately below the second tank.

4. The motor vehicle according to claim 2 or 3, comprising a pipe (15), which connects the first and second tanks (10) by having two ends directly communicating with the first portion (10a) and the second inner volume (10b), respectively.

5. The motor vehicle according to claim 4, wherein the pipe (15) comprises an intermediate section having a rectilinear axis parallel to the pitch axis.

6. The motor vehicle according to claim 4 or 5, comprising a plurality of pumps (17) configured to draw fuel from the first and second tanks and feed the fuel to the internal combustion engine (3) via a supply line, the pumps (17) being all arranged within the second portion (10c).

7. The motor vehicle according to claim 6, wherein all the pumps (17) are arranged at the bottom of the second portion (10c).

8. The motor vehicle according to any one of claims 2 to 7, wherein the first tank comprises a first and a second shell (20c, 20) respectively externally delimiting the first and the second portion (10a, 10c), the second shell (20) comprising an end (20b) projecting forwardly relative to the first shell (20c) according to the roll axis.

9. The motor vehicle according to any of the preceding claims, wherein the first and second tanks (10) have respective sections according to a plane of section orthogonal to the yaw axis, the sections having a tapered shape toward a rear of the motor vehicle (1).

10. The motor vehicle according to claim 9, wherein the shape of the sections is basically triangular.

## Patentansprüche

1. Kraftfahrzeug, umfassend:
- einen Verbrennungsmotor (3), der sich entlang einer Richtung parallel zu einer Rollachse des Kraftfahrzeugs (1) erstreckt,
- einen ersten und einen zweiten Tank (10) zum Enthalten eines Kraftstoffs für die Versorgung des Verbrennungsmotors (3),
wobei der Verbrennungsmotor (3) zwischen dem ersten und zweiten Tank (10) gemäß einer Nickachse des Kraftfahrzeugs (1) angeordnet ist,
**dadurch gekennzeichnet, dass** der erste Tank eine erste Höhe gemäß einer Gierachse des Kraftfahrzeugs (1) aufweist, die größer als eine zweite Höhe des zweiten Tanks gemäß der Gierachse ist.

2. Kraftfahrzeug nach Anspruch 1, wobei der zweite Tank ein zweites Innenvolumen (10b) definiert, und wobei der erste Tank ein erstes Innenvolumen definiert, das einen ersten Abschnitt (10a) mit einer dritten Höhe gemäß der Gierachse aufweist, die gleich einer vierten Höhe des zweiten Innenvolumens (10b) gemäß der Gierachse ist, wobei das erste Innenvolumen zusätzlich einen zweiten Abschnitt (10c) unterhalb des ersten Abschnitts (10a) aufweist und direkt mit dem ersten Abschnitt (10a) kommuniziert.

3. Kraftfahrzeug nach Anspruch 2, ferner umfassend eine Auspuffanlage (32), die dazu konfiguriert ist, von dem Verbrennungsmotor (3) erzeugte Abgase in die Umgebung außerhalb des Kraftfahrzeugs (1) abzugeben, wobei die Auspuffanlage (32) zumindest teilweise in einem Raum untergebracht ist, der unmittelbar unter dem zweiten Tank positioniert ist.

4. Kraftfahrzeug nach Anspruch 2 oder 3, umfassend ein Rohr (15), das den ersten und zweiten Tank (10) verbindet, indem es zwei Enden aufweist, die direkt mit dem ersten Abschnitt (10a) bzw. dem zweiten Innenvolumen (10b) kommunizieren.

5. Kraftfahrzeug nach Anspruch 4, wobei das Rohr (15) eine Zwischensektion mit einer geradlinigen Achse parallel zur Nickachse umfasst.

6. Kraftfahrzeug nach Anspruch 4 oder 5, umfassend eine Vielzahl von Pumpen (17), die konfiguriert sind, um Kraftstoff aus dem ersten und zweiten Tank anzusaugen und den Kraftstoff über eine Versorgungsleitung dem Verbrennungsmotor (3) zuzuführen, wobei die Pumpen (17) alle innerhalb des zweiten Abschnitts (10c) angeordnet sind.

7. Kraftfahrzeug nach Anspruch 6, wobei alle Pumpen (17) am Boden des zweiten Abschnitts (10c) angeordnet sind.

8. Kraftfahrzeug nach einem der Ansprüche 2 bis 7, wobei der erste Tank eine erste und eine zweite Schale (20c, 20) umfasst, die jeweils den ersten und den zweiten Abschnitt (10a, 10c) nach außen hin begrenzen, wobei die zweite Schale (20) ein Ende (20b) umfasst, das relativ zur ersten Schale (20c) gemäß der Rollachse nach vorne vorsteht.

9. Kraftfahrzeug nach einem der vorhergehenden Ansprüche, wobei der erste und der zweite Tank (10) jeweilige Sektionen gemäß einer Schnittebene orthogonal zu der Gierachse aufweisen, wobei die Sektionen eine sich verjüngende Form in Richtung einer Rückseite des Kraftfahrzeugs (1) aufweisen.

10. Kraftfahrzeug nach Anspruch 9, wobei die Form der Sektionen im Wesentlichen dreieckig ist.

## Revendications

1. Véhicule à moteur comprenant
- un moteur à combustion interne (3) s'étendant suivant une direction parallèle à un axe de roulis du véhicule à moteur (1),
- un premier et un second réservoir (10) pour contenir un carburant destiné à alimenter le moteur à combustion interne (3),
dans lequel le moteur à combustion interne (3) est disposé entre les premier et second réservoirs (10) selon un axe de tangage du véhicule à moteur (1),
**caractérisé en ce que** le premier réservoir a une première hauteur selon un axe de lacet du véhicule à moteur (1) supérieure à une deuxième hauteur du deuxième réservoir selon l'axe de lacet.

2. Véhicule à moteur selon la revendication 1, dans lequel le second réservoir définit un second volume intérieur (10b), et dans lequel le premier réservoir définit un premier volume intérieur ayant une première partie (10a) ayant une troisième hauteur selon l'axe de lacet égale à une quatrième hauteur du second volume intérieur (10b) selon l'axe de lacet, le premier volume intérieur ayant en outre une seconde partie (10c) au-dessous de la première partie (10a) et communiquant directement avec la première partie (10a).

3. Véhicule à moteur selon la revendication 2, comprenant en outre un dispositif d'échappement (32) configuré pour évacuer des gaz d'échappement produits par le moteur à combustion interne (3) dans l'environnement à l'extérieur du véhicule à moteur (1), dans lequel le dispositif d'échappement (32) est au moins partiellement logé dans un compartiment positionné immédiatement au-dessous du second réservoir.

4. Véhicule à moteur selon la revendication 2 ou 3, comprenant un tuyau (15) qui relie les premier et second réservoirs (10) en ayant deux extrémités communiquant directement avec la première partie (10a) et le second volume intérieur (10b), respectivement.

5. Véhicule à moteur selon la revendication 4, dans lequel le tuyau (15) comprend une section intermédiaire ayant un axe rectiligne parallèle à l'axe de tangage.

6. Véhicule à moteur selon la revendication 4 ou 5, comprenant une pluralité de pompes (17) configurées pour aspirer le carburant à partir des premier et second réservoirs et alimenter le moteur à combustion interne (3) via une conduite d'alimentation, les pompes (17) étant toutes disposées à l'intérieur de la seconde partie (10c).

7. Véhicule automobile selon la revendication 6, dans lequel toutes les pompes (17) sont disposées au fond de la seconde partie (10c).

8. Véhicule automobile selon l'une quelconque des revendications 2 à 7, dans lequel le premier réservoir comprend une première et une seconde coque (20c, 20) délimitant respectivement extérieurement la première et la seconde partie (10a, 10c), la seconde coque (20) comprenant une extrémité (20b) faisant saillie vers l'avant par rapport à la première coque (20c) suivant l'axe de roulis.

9. Véhicule à moteur selon l'une quelconque des revendications précédentes, dans lequel les premier et second réservoirs (10) ont des sections respectives selon un plan de coupe orthogonal à l'axe de lacet, les sections ayant une forme effilée vers l'arrière du véhicule à moteur (1).

10. Véhicule à moteur selon la revendication 9, dans lequel la forme des sections est essentiellement triangulaire.
